# EUROPEAN PATENT APPLICATION

(11) **EP 1 437 494 A1**
(43) Date of publication of application: **14.07.2004**
(21) Application number: 02779577.2
(22) Date of filing: 18.09.2002
(51) Int. Cl.: F01P 11/00, F01P 11/18

(54) **DEVICE FOR CONTROLLING THE CONDUCTIVITY, ADJUSTING THE ACIDITY AND DE-MINERALISING THE WATER IN THE COOLING CIRCUIT OF AN ENGINE**

(30) Priority: 19.09.2001 ES 200102306 U
(71) Applicant: Peter Taboada, S.l., 36201 Vigo, Pontevedra (ES)
(72) Inventor: TABOADA PRESEDO, Jesus Manuel, E-36201 Vigo, Pontevedra (ES)
(74) Representative: Temino Ceniceros, Ignacio
(86) International application number: PCT/ES2002/000441
(87) International publication number: WO 2003/025362

(57) **Abstract**

The invention relates relates to a device for controlling the conductivity, adjusting the acidity and de-mineralising the water in the cooling circuit of an engine. The inventive device is intended for use in boat diesel engines in order to produce pure water which is injected, whenever necessary, into the buffer tank, said tank being connected to the manifold of the engine or, alternatively, to the cooling circuit of said manifold. For this purpose, the inventive device is provided with a piece of de-mineralising equipment which is supplied by means of a freshwater storage tank which drives water through an electrovalve.

## Description

### OBJECT OF THE INVENTION

The present invention is a plant to be used in diesel engines, especially in ships; it controls the conductivity and corrects the acidity of the water refrigeration system. This plant also demineralises the water and produces pure water to be injected in the equalizing tank whenever it is necessary.

The aim of this invention is to create a plant that besides to control the conductivity and to correct the acidity of the water makes in an independent way a demineralising of the water to introduce water totally pure in the equalizing tank.

### STATE OF THE ART OF THE INVENTION

In the utility model number 9901801 has been described a plant that controls the conductivity and corrects the acidity of the water refrigeration system to be used preferable in ships. This plant measures the pH level in an automatic way, keeping the pH between 7,8 and 8 in a range of temperature between 70 and 90 °C. At the same time the plant doses a chemical solution that avoids the corrosion instantly and reduce to maximum oxide grown and mud in the circuit, which increase the refrigerant power of the water.

This plant also controls the conductivity of the water in an automatic way; it constantly measurements and warns through a visual and acoustic warning when the conductivity is not the suitable one. This could be caused by contamination of saltwater from the cooler.

The elements and components that make possible the control of the conductivity and pH, consist mainly in a conductometer and a pH meter as control elements. These two elements are connecting to the refrigeration system of the engine through a conductivity electrode, a pH probe and a temperature corrector probe. All this elements are connected with a dosing pump, which is communicated with a deposit of inhibiting liquid. This pump injects the inhibiting liquid in the refrigeration system.

The plant described in that model does not solve neither the way that the water is injected to the equalizing tank nor the way of purification of the water that should be given to the refrigeration system.

### DESCRIPTION OF THE INVENTION

This plant besides of controlling the pH and conductivity also includes an equipment which makes possible the demineralises of the water, it functions are totally automatics and it injects pure water to the equalizing tank ones the water is under the advised level, this way the water introduced in the refrigeration system is of the best quality.

Concretely, the demineraliser plant is fed from the raw water tank of the ship and through an electrically operated valve water is introduced to the demineraliser plant that receives the signals from the level probes. This way when there is a low level of water in the equalizing tank, the demineraliser plant is energised and the high-pressure pump starts, associated with pressure switches. The water is pumped according with the signals of the level probes and logically from the control that the pressure switches makes on the high-pressure pump. The water is pumped through a filtration and pressurization system, moving it through a membrane element housing of reverse osmosis in which there are two independent conduits, the first one is for the rejection of water to the raw water tank and the second one takes the demineralised water to the equalizing tank of the refrigeration circuit.

Therefore, the demineraliser plant starts when the level probes of the equalizing tank check that has been reach a minimum level in it. The equipment also could be energised manually in this case it will be provided with a special switch (manual/OFF/automatic), located at the control panel.

Also it has been anticipated that beside the electrically operated valve could be incorporated a deferrizer filter to process iron components dissolved in the water, which could damage seriously the corresponding membranes. From this membranes go out two conduits the first one for rejected water and the second one injects water to the equalizing tank.

### DRAWING DESCRIPTION

To complete this description and make easy its understanding, it is attached a drawing which shows in an illustrative way the operating of the plant. In this scheme can be observed the equipment that controls the conductivity, corrects the acidity of the water and the one witch treat the water to be injected in the refrigeration system.

### PREFERRED EMBODIMENT OF THE INVENTION

In the corresponding drawing it can be observed that the invention has two principals parts (1-2) showed in their corresponding blocks in broken lines. The block 1 makes reference to the equipment that controls the conductivity and corrects the acidity in a diesel engine (3); it includes the corresponding cylinders (5). It also can be observed the water pump (6) and the cooler (7).

The block in witch is done the conductivity control and acidity correction includes a deposit (8) in witch is poured the inhibitor liquid, that through the dosing pump (9), associated to the stroke frequency regulator (10) pumps the liquid to the refrigeration system (4) through the corresponding pipe (11). It includes a conductometer (12) and a pH-meter (13) with their corresponding screens (14-15). The conductometer is associated to a visual (16) and acoustic warning. The communication between the conductometer (12) and the refrigeration system (4) is made through a conductivity electrode (17). On the other hand the communication between the pH-meter (13) and the refrigeration system (4) includes a pH electrode and a temperature corrector probe (19), been this probes protected by a high temperature resistance conduit (20).

This plant besides controls the conductivity and corrects the acidity also count with a demineraliser (block 2) of the water that is injected to the refrigeration circuit (4) through the equalizing tank.

In this equalizing tank (22) has been installed a pair of level probes (24), maximum and minimum, their signals (25) are sending to the control panel (26) of the demineraliser plant (2), this equalizing tank is feed from the raw water tank of the ship (27) and through an electrical operated valve (28) the water passes to the demineraliser equipment (2). It includes a high-pressure pump (29) and a pair of safety pressure switches (30-31) of high and low pressure. All this equipment are integrated in such a way that ones the level of the water in the equalizing tank (22) is under the recommended level, the demineraliser equipment (2) injects water to the equalizing tank through the pipe (32).

The water coming from the raw water tank (27) reaches the demineraliser system through the electrical operated valve (28), it can be installed a deferrizer filter to treat iron components dissolved in the water. All these components are programming in such a way that if there is not enough pressure in the pump (29), the equipment does not allow the energizer of this pump, it is possible thanks to the pressure switch (30) setting in factory. If this happen a pilot light located in the control panel (26) is energized.

When the feeding pressure is the suitable one the pump starts raising the pressure inside the membrane (29) that is located inside the membrane element housing (33), this membrane is made of fiber glass and with the maximum resistance, this way the safety pressure switch (31) stops this pump (29) if the pressure exceeds the value setting in factory. If this happened a warning in the control panel is energized.

Once the water has been filtered and its pressure has been increased, the water is passed through the membrane located inside the element housing (33). From this membrane goes out two conduit, the first one (32) goes to the equalizing tank and the other one (34) goes to the raw water tank (27).

Thanks to this plant besides to control the conductivity and to correct the acidity of the water, it is possible to introduce demineralised water to the refrigeration circuit of the engine.

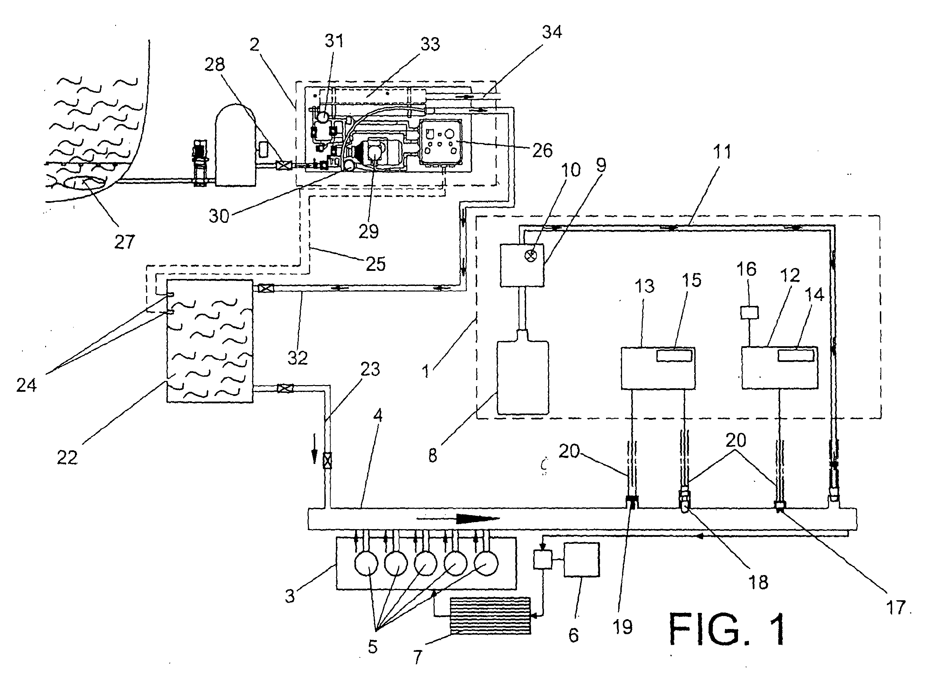

## Claims

1. Plant to control the conductivity, to correct the acidity and to demineralise the water of the refrigeration system, to be used in diesel engines, preferably in diesel marine engines and includes a pH-meter (13) and a conductometer (12) associated with a dosing pump which injects a corrosion/ incrustation inhibitor liquid in the refrigeration system (4) of the engine, characterised because it includes a demineraliser equipment (2) which purifies the water that is applied to the equalizing tank (22) connected with the refrigeration circuit (4) replacing the decrease of the level by with purified water, the plant (2) is fed with a raw water tank (27) that allows the entrance of water in the demineraliser equipment (2) through an electronic valve (28), using a high-pressure pump and safety pressure switches is done the filtering and pressurization of the water which is passed through the membranes (29), inside the membrane element housing (33) there are two conduits, the first one (32) for water rejected for its recirculation to the raw water tank (27) and the second one (34) for purified water injected to the equalizing tank (22) connected to the refrigeration system (4) of the engine.

2. Plant to control the conductivity, correct the acidity and demineralise the water of the refrigeration system, according to claim 1, characterised because the equalizing tank (22) includes a pair of level probes (24) minimum and maximum, whose detected signals (25) are redirected to the control panel (26) of the demineraliser plant (2) to start up and to stop the pump (29).
